# EUROPEAN PATENT APPLICATION

(11) **EP 4 765 780 A1**
(43) Date of publication of application: **24.06.2026**
(21) Application number: 25218850.3
(22) Date of filing: 26.11.2025
(51) Int. Cl.: H04L 67/30, H04W 8/20

(54) **IN-VEHICLE DEVICE, VEHICLE, SYSTEM, AND PROFILE SETTING METHOD**

(30) Priority: 17.12.2024 JP 2024221025
(71) Applicant: Toyota Jidosha Kabushiki Kaisha, Toyota-shi, Aichi-ken 471-8571 (JP)
(72) Inventor: SUGIMOTO, Shingo, Toyota-shi, Aichi-ken 471-8571 (JP); ITO, Yuma, Toyota-shi, Aichi-ken 471-8571 (JP)
(74) Representative: Simmons & Simmons

(57) **Abstract**

An in-vehicle device includes a first communication circuit (111) that supports a mobile communication standard, a second communication circuit (112) that supports a wireless local area network communication standard or a short-range wireless communication standard, a memory (102), and a processor (103). The processor (103) is configured to receive identification information linked to a first region via the second communication circuit by performing wireless local area network communication or short-range wireless communication with a wireless communication device via the second communication circuit. The processor (103) receives a profile corresponding to the first region as a second profile from the information processing device by the mobile communication via the first communication circuit, and stores the second profile in the memory (102) by overwriting a first profile stored in the memory (102).

## Description

### BACKGROUND OF THE INVENTION

### 1. Field of the Invention

The present disclosure relates to an in-vehicle device, a vehicle, a system, and a profile setting method.

### 2. Description of Related Art

There is known a technique of rewriting a communication profile in an in-vehicle device. For example, Japanese Unexamined Patent Application Publication No. 2021-157439 (JP 2021-157439 A) discloses an in-vehicle communication device that uses a first profile stored in advance in a storage unit and, stores the second profile while keeping the first profile stored in response to receiving from a server device within a predetermined area.

### SUMMARY OF THE INVENTION

When the destination country of a vehicle equipped with an eSIM, such as a connected car, is unknown at the time of factory shipment, it may be required to rewrite the profile to a profile for the destination country when the vehicle arrives in the destination country. The term "eSIM" is an abbreviation for "embedded Subscriber Identity Module". An eSIM is a SIM of an embedded type. The term "SIM" is an abbreviation for "Subscriber Identity Module". One possible method of automating the rewriting is to automatically rewrite the profile to a profile for an intended country when the vehicle detects radio waves from a mobile communication network provided by a local communication carrier, using such detection as a trigger, for example. However, in a transportation of a vehicle between countries using a transport ship, for example, there is a risk that the vehicle erroneously acquires a profile for a country that is different from the destination country when the vehicle passes through an area covered by a communication carrier of the different country.

The present disclosure provides a an in-vehicle device, a vehicle, a system, and a profile setting method that reduce the possibility of erroneously acquiring a profile for a different region.

A first aspect of the present disclosure provides an in-vehicle device installed in a vehicle. The in-vehicle device includes: a first communication circuit that supports a mobile communication standard that utilizes a mobile communication network of a regional communication carrier; a second communication circuit that supports a wireless local area network communication standard or a short-range wireless communication standard; a memory; and a processor. The memory is for storing a profile that corresponds to one of two or more regions and that is used for performing mobile communication via the first communication circuit within a corresponding region. The memory is configured to store a first profile is used for performing the mobile communication via the first communication circuit to receive a second profile. The second profile is common to the two or more regions and provided by an information processing device. The processor is configured to perform wireless local area network communication or short-range wireless communication with a wireless communication device installed in a first region, among the two or more regions, via the second communication circuit, receive identification information linked to the first region from the wireless communication device via the second communication circuit, perform the mobile communication via the first communication circuit using the first profile stored in the memory based on the received identification information, receive, from the information processing device, a profile corresponding to the first region as the second profile, and store the second profile in the memory by overwriting the first profile stored in the memory with the received second profile.

A second aspect of the present disclosure provides an in-vehicle device installed in a vehicle. The in-vehicle device includes: a communication device that supports both a first wireless communication method that utilizes a mobile communication network of a regional communication carrier and a second wireless communication method that is different from the first wireless communication method; a memory configured to store a profile that corresponds to one of two or more regions and that is used for performing communication by the first wireless communication method via the communication device within a corresponding region; and a processor. The processor is configured to perform communication by the second wireless communication method with a wireless communication device installed in a first region, among the two or more regions, via the communication device, receive identification information linked to the first region from the wireless communication device via communication by the second wireless communication method, acquire a profile corresponding to the first region from an information processing device based on the received identification information, and store the acquired profile in the memory.

In the in-vehicle device according to the second aspect of the present disclosure, the memory may be configured to store a first profile that is used for performing communication by the first wireless communication method via the communication device to acquire a second profile that is common to the two or more regions and provided by the information processing device. The processor may be configured to, in response to receiving the identification information from the wireless communication device, acquire the profile corresponding to the first region from the information processing device as the second profile in communication by the first wireless communication method via the communication device using the first profile stored in the memory.

In the in-vehicle device according to the second aspect of the present disclosure, the processor may be configured to overwrite the first profile stored in the memory with the second profile.

In the in-vehicle device according to the second aspect of the present disclosure, the processor may be configured to: in response to receiving the identification information from the wireless communication device, further perform communication by the second wireless communication method via the communication device; and acquire the profile corresponding to the first region from the information processing device via the wireless communication device.

In the in-vehicle device according to the second aspect of the present disclosure, the identification information may be an identifier of the wireless communication device. The processor may be configured to acquire, from the information processing device, a profile corresponding to a region linked in advance to the identifier of the wireless communication device, among the two or more regions, as the profile corresponding to the first region.

In the in-vehicle device according to the second aspect of the present disclosure, the memory may be configured to store correspondence relationship information relating to a correspondence relationship between identifiers of the wireless communication device and one or more other wireless communication devices and the two or more regions. The processor may be configured to determine the first region based on the identification information and the correspondence relationship information stored in the memory, and transmit a request for the profile corresponding to the determined first region to the information processing device.

In the in-vehicle device according to the second aspect of the present disclosure, the identification information may include an identifier of the first region. The processor may be configured to determine the first region based on the identification information, and transmit a request for the profile corresponding to the determined first region to the information processing device.

The in-vehicle device according to the second aspect of the present disclosure may further include a positioning device configured to measure a position of the vehicle. The processor may be configured to determine the first region based on the identification information and the position measured by the positioning device, and transmit a request for the profile corresponding to the determined first region to the information processing device.

In the in-vehicle device according to the second aspect of the present disclosure, the communication by the second wireless communication method may be wireless local area network communication or short-range wireless communication.

In the in-vehicle device according to the second aspect of the present disclosure, the two or more regions may each be a country.

A vehicle may include the in-vehicle device according to the first or second aspect of the present disclosure.

A system may include the in-vehicle device according to the first or second aspect of the present disclosure and the information processing device.

A system may include the in-vehicle device according to the first or second aspect of the present disclosure and the wireless communication device.

A non-transitory storage medium may store instructions that are executable by a computer and that cause the computer to perform function as the in-vehicle device according to the first or second aspect of the present disclosure.

A third aspect of the present disclosure provides a profile setting method performed by an in-vehicle device installed in a vehicle. The in-vehicle device includes: a communication device that supports both a first wireless communication method that utilizes a mobile communication network of a regional communication carrier and a second wireless communication method that is different from the first wireless communication method; a memory that stores a profile that corresponds to one of two or more regions and that is used for performing communication by the first wireless communication method via the communication device within a corresponding region; and a processor. The method includes: in response to receiving identification information linked to a first region, among the two or more regions, from a wireless communication device installed in the first region in communication by the second wireless communication method with the wireless communication device via the communication device, the processor acquiring a profile corresponding to the first region from an information processing device; and the processor storing the acquired profile in the memory.

In the profile setting method according to the third aspect of the present disclosure, the memory may store a first profile that is used for performing communication by the first wireless communication method via the communication device to acquire a second profile that is common to the two or more regions and provided by the information processing device. The acquiring may include, in response to receiving the identification information from the wireless communication device, acquiring the profile corresponding to the first region from the information processing device as the second profile in communication by the first wireless communication method via the communication device using the first profile stored in the memory.

In the profile setting method according to the third aspect of the present disclosure, the acquiring may include, in response to receiving the identification information from the wireless communication device, further performing communication by the second wireless communication method via the communication device, and acquiring the profile corresponding to the first region from the information processing device via the wireless communication device.

In the profile setting method according to the third aspect of the present disclosure, the identification information may be an identifier of the wireless communication device. The acquiring may include acquiring, from the information processing device, a profile corresponding to a region linked in advance to the identifier of the wireless communication device, among the two or more regions, as the profile corresponding to the first region.

In the profile setting method according to the third aspect of the present disclosure, the identification information may include an identifier of the first region. The acquiring may include determining the first region based on the identification information, and transmitting a request for the profile corresponding to the determined first region to the information processing device.

With the present disclosure, it is possible to reduce the possibility of erroneously acquiring a profile for a different region.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a schematic configuration of a system according to an embodiment of the present disclosure;
FIG. 2 is a block diagram illustrating the configuration of an in-vehicle device according to the embodiment of the present disclosure;
FIG. 3 is a conceptual diagram illustrating an example in which a vehicle in which the in-vehicle device according to the embodiment of the present disclosure is installed is transported by a transport ship; and
FIG. 4 is a flowchart illustrating operation of the in-vehicle device according to the embodiment of the present disclosure.

### DETAILED DESCRIPTION OF EMBODIMENTS

Hereinafter, an embodiment of the present disclosure will be described with reference to the drawings.

In each drawing, the same or corresponding portions are denoted by the same reference signs. In the description of the present embodiment, description of the same or corresponding portions will be omitted or simplified as appropriate.

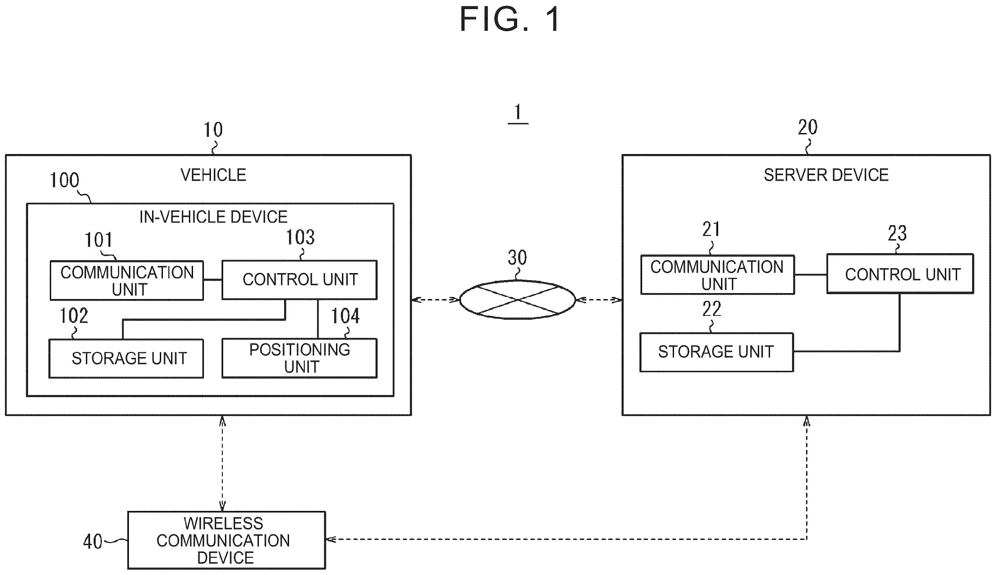

The configuration of a system 1 according to the present embodiment will be described with reference to FIG. 1.

The system 1 includes an in-vehicle device 100, a server device 20, and a wireless communication device 40. The system 1 may include one or more other in-vehicle devices similar to the in-vehicle device 100. The system 1 may include one or more other server devices similar to the server device 20. The system 1 may include one or more other wireless communication devices similar to the wireless communication device 40.

The in-vehicle device 100 is a communication device installed in the vehicle 10. In the present embodiment, the in-vehicle device 100 supports both a first wireless communication method that utilizes a mobile communication network 30 of a regional communication carrier, and a second wireless communication method that is different from the first wireless communication method. The first wireless communication method is a wireless communication method that complies with a mobile communication standard such as LTE, 4G, or 5G, for example. The term "LTE" is an abbreviation for "Long Term Evolution". The term "4G" is an abbreviation for "4th Generation". The term "5G" is an abbreviation for "5th Generation". The second wireless communication method may be any wireless communication method that does not utilize the mobile communication network 30, and may be a wireless communication method that complies with a wireless LAN communication standard such as IEEE 802.11, or a short-range wireless communication standard such as NFC, UHF, or Bluetooth (registered trademark), for example. The term "IEEE" is an abbreviation for "Institute of Electrical and Electronics Engineers". The term "LAN" is an abbreviation for "Local Area Network". The term "NFC" is an abbreviation for "Near-Field Communication". The term "UHF" is an abbreviation for "Ultra-High Frequency".

The vehicle 10 is an automobile of any type, such as a gasoline vehicle, a diesel vehicle, a hydrogen vehicle, an HEV, a PHEV, a BEV, or an FCEV. The term "HEV" is an abbreviation for "Hybrid Electric Vehicle". The term "PHEV" is an abbreviation for "Plug-in Hybrid Electric Vehicle". The term "BEV" is an abbreviation for "Battery Electric Vehicle". The term "FCEV" is an abbreviation for "Fuel Cell Electric Vehicle". The driving of the vehicle 10 may be automated to any level. The level of autonomous driving is one of Levels 1 to 5 defined by the SAE, for example. The term "SAE" is an abbreviation for "Society of Automotive Engineers". The vehicle 10 may be a MaaS dedicated vehicle. The term "MaaS" is an abbreviation for "Mobility as a Service".

The server device 20 is an information processing device that is installed in a facility such as a data center and that belongs to a cloud computing system or a different computing system.

The wireless communication device 40 is a communication device installed at or around a point through which the vehicle 10 passes in a first region Rt, among two or more regions R1, R2, .... In the present embodiment, the two or more regions R1, R2, ... are each a country. However, the two or more regions R1, R2, ... may be regions other than countries, such as a plurality of regions within the same country or regions spanning a plurality of countries. In the present embodiment, the first region Rt is the destination country of the vehicle 10. However, the first region Rt may be a country, or a region rather than a country, through which the driver of the vehicle 10 temporarily passes or stays while driving from country to country, for example. Also in one or more regions different from the first region Rt, among the two or more regions R1, R2, ..., one or more other wireless communication devices similar to the wireless communication device 40 may be installed at or around one or more points through which one or more other vehicles similar to the vehicle 10 pass. In the present embodiment, the wireless communication device 40 supports the second wireless communication method. The wireless communication device 40 is a communication device capable of wireless LAN communication such as a Wi-Fi (registered trademark) access point, or a communication device capable of short-range wireless communication such as NFC, UHF, or Bluetooth, for example.

An overview of the present embodiment will be described with reference to FIG. 1.

Upon receiving identification information linked to the first region Rt from the wireless communication device 40 installed in the first region Rt by performing communication by the second wireless communication method with the wireless communication device 40, the in-vehicle device 100 acquires a profile corresponding to the first region Rt from the server device 20. The in-vehicle device 100 stores the acquired profile. This profile is used when performing communication by the first wireless communication method in the corresponding region, that is, in the first region Rt.

In the present embodiment, the acquisition of a profile for a region linked to identification information is automatically triggered by the reception of the identification information by a wireless communication method that does not utilize the mobile communication network 30, rather than being triggered by the detection of radio waves from the mobile communication network 30. This reduces the possibility of erroneously acquiring a profile for a different region.

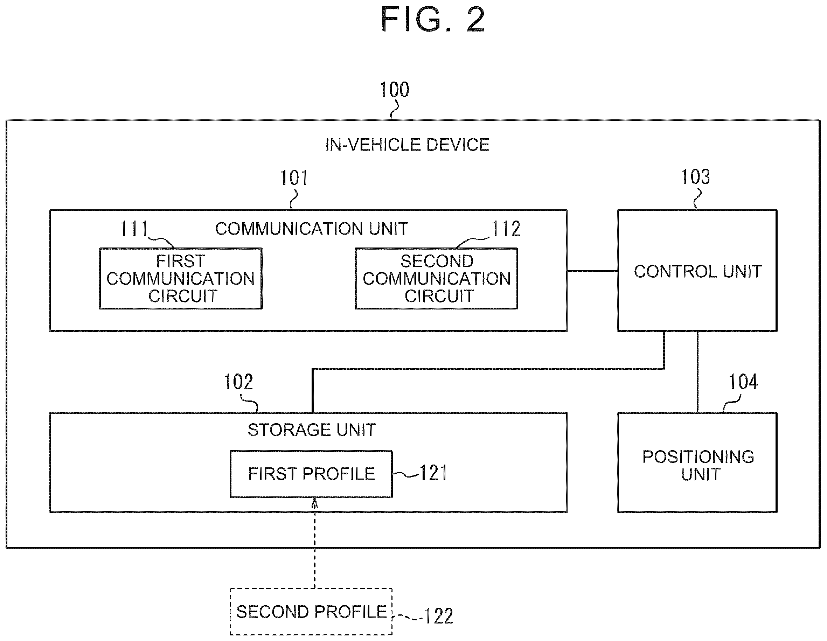

In the present embodiment, a profile is acquired by the first wireless communication method that utilizes the mobile communication network 30. Therefore, as illustrated in FIG. 2, the in-vehicle device 100 stores a first profile 121 in advance. The first profile 121 is a profile that is used when performing communication by the first wireless communication method to acquire a second profile 122 that is common to the two or more regions R1, R2, ... and provided by the server device 20. The first profile 121 may be a profile that does not allow communication via the mobile communication network 30 other than receiving the second profile 122 from the server device 20 within the first region Rt. Upon receiving identification information from the wireless communication device 40, the in-vehicle device 100 acquires a profile corresponding to the first region Rt from the server device 20 as the second profile 122 by performing communication by the first wireless communication method using the first profile 121. Then, the in-vehicle device 100 overwrites the first profile 121 with the second profile 122. Alternatively, the in-vehicle device 100 may store the second profile 122 while keeping the first profile 121 stored, as in the in-vehicle communication device disclosed in Japanese Unexamined Patent Application Publication No. 2021-157439 (JP 2021-157439 A).

In a modification, a profile may be acquired by the second wireless communication method that does not utilize the mobile communication network 30. In such a modification, upon receiving identification information from the wireless communication device 40, the in-vehicle device 100 further performs communication by the second wireless communication method, and acquires a profile corresponding to the first region Rt from the server device 20 via the wireless communication device 40. Then, the in-vehicle device 100 stores the acquired profile. According to this modification, it is not necessary to store the first profile 121 in advance.

The wireless communication device 40 and the server device 20 may be connected via any network such as the Internet. Such a network may include the mobile communication network 30.

In the present embodiment, the in-vehicle device 100 may have a country determination function. The country determination function is a function to determine the country in which the vehicle 10 is located. For example, the in-vehicle device 100 detects, as the wireless communication device 40, a Wi-Fi access point that is installed in the destination country and has identification information determined in advance. The identification information may be an identifier of the Wi-Fi access point, such as an SSID or a MAC address, or may include an identifier of the country in which the Wi-Fi access point is installed, such as a character string indicating a country name or a country code. The term "SSID" is an abbreviation for "Service Set IDentifier". The term "MAC" is an abbreviation for "Media Access Control". When the identification information is an identifier of a Wi-Fi access point, the in-vehicle device 100 stores in advance a correspondence relationship between the identifier of the Wi-Fi access point and the country in which the Wi-Fi access point is installed. The in-vehicle device 100 determines, based on the identification information on the detected Wi-Fi access point, that the vehicle 10 is located in the destination country using the country determination function. When the destination country has a neighboring country, the Wi-Fi access point is installed at a location where radio waves cannot reach the neighboring country, for example, at a location 100 meters or more inside the border. Therefore, the Wi-Fi access point installed in the destination country is not detected in the neighboring country. The in-vehicle device 100 uses the first profile 121 to transmit, to the server device 20, a request signal for the second profile 122 for performing mobile communication in the country determined by the country determination function. The server device 20 may determine the profile to be transmitted as the second profile 122 using a known method. When the request signal from the in-vehicle device 100 includes a country identifier, however, the server device 20 may determine the profile to be transmitted based on the country identifier. The in-vehicle device 100 either overwrites the first profile 121 with the second profile 122 received from the server device 20, or stores the second profile 122 while keeping the first profile 121 stored.

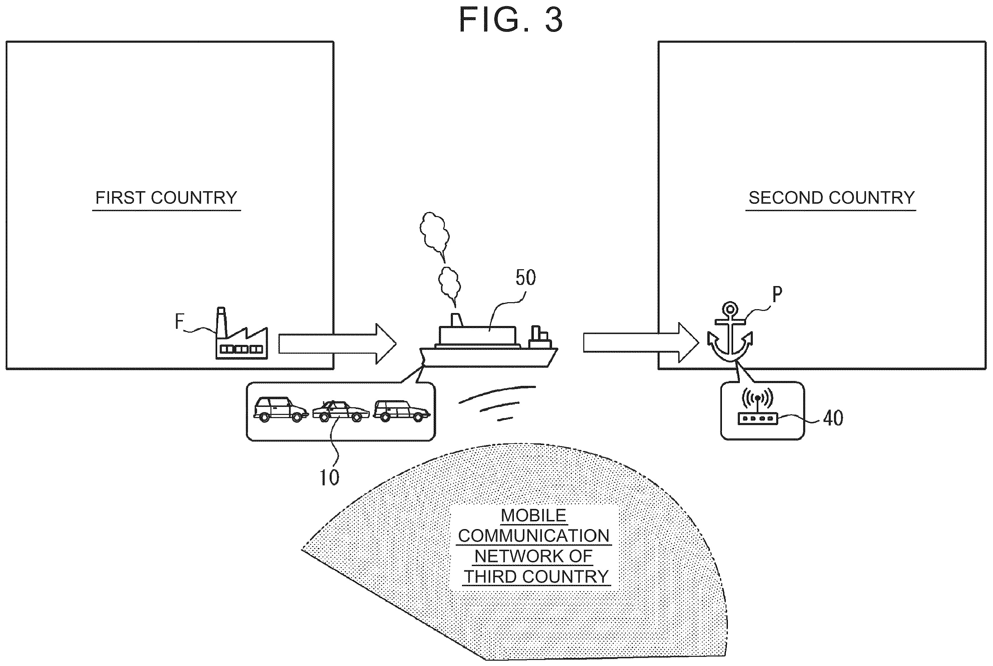

As illustrated in FIG. 3, it is conceivable that the vehicle 10 in which the in-vehicle device 100 is installed is transported by a transport ship 50 from a first country to a second country that is the destination country, for example. In this example, the vehicle 10 is shipped from a factory F in the first country, and is either driven or transported by truck to be loaded onto the transport ship 50. When the transport ship 50 carrying the vehicle 10 arrives at a port P in the second country, the in-vehicle device 100 detects the wireless communication device 40 installed in advance at the port P by receiving a beacon signal emitted from the wireless communication device 40. Then, the in-vehicle device 100 determines that the vehicle 10 is located in the country corresponding to the identification information included in the beacon signal, that is, the second country. The in-vehicle device 100 is controlled so as to communicate only by the second wireless communication method corresponding to the detected wireless communication device 40. Therefore, as illustrated in FIG. 3, the in-vehicle device 100 does not erroneously detect radio waves from a mobile communication network of a country other than the second country, that is, a third country, as a trigger for profile acquisition during marine transport, for example.

According to this example, the destination country is automatically determined based on the identification information on the wireless communication device 40 detected by the in-vehicle device 100, which reduces the possibility of erroneously determining the destination country compared to a method in which the detection of radio waves from a local mobile communication network is used as a trigger, and also enables timely rewriting the profile when the vehicle 10 arrives in the destination country. As an alternative to mobile communications, it is conceivable to combine satellite positioning and map data to acquire location information and determine the country based on the position information. However, there is a problem that the country may not be accurately determined for destination countries where there are restrictions on the use of satellites or the acquisition of map data. The above example can solve such a problem.

In a different example, it is conceivable that the vehicle 10 moves from a first country to a second country for a temporary stay when the driver of the vehicle 10 is driving from country to country. In this example, when the vehicle 10 arrives at a point some distance away from the border, for example, 100 meters ahead, after passing through the border checkpoint, the in-vehicle device 100 detects the wireless communication device 40 installed in advance at that point by receiving a beacon signal emitted from the wireless communication device 40. Then, the in-vehicle device 100 determines that the vehicle 10 is located in the country corresponding to the identification information included in the beacon signal, that is, the second country. The in-vehicle device 100 is controlled so as to communicate only by the second wireless communication method corresponding to the detected wireless communication device 40. Therefore, even if both radio waves from the mobile communication network of the first country and radio waves from the mobile communication network of the second country are detected near the border, it is possible to acquire a profile in a timely manner when the vehicle 10 leaves the country. In this example, the in-vehicle device 100 may rewrite the profile with the acquired profile, or may additionally store a profile each time a profile is acquired in each country traveled by the vehicle 10, rather than rewriting the profile.

The configuration of the in-vehicle device 100 according to the present embodiment will be described with reference to FIGS. 1 and 2.

The in-vehicle device 100 includes a communication unit 101, a storage unit 102, a control unit 103, and a positioning unit 104.

The communication unit 101 includes a first communication circuit 111 and a second communication circuit 112. The first communication circuit 111 is a communication circuit that supports a mobile communication standard that utilizes the mobile communication network 30 of a regional communication carrier. The second communication circuit 112 is a communication circuit that supports the wireless LAN communication standard or the short-range wireless communication standard. That is, the communication unit 101 supports both a first wireless communication method that utilizes the mobile communication network 30 of a regional communication carrier, and a second wireless communication method that is different from the first wireless communication method. The communication unit 101 receives information to be used for the operation of the in-vehicle device 100, and transmits information obtained by the operation of the in-vehicle device 100.

The storage unit 102 includes at least one semiconductor memory, at least one magnetic memory, at least one optical memory, or any combination of these. The semiconductor memory is a RAM, a ROM, or a flash memory, for example. The term "RAM" is an abbreviation for "Random Access Memory". The term "ROM" is an abbreviation for "Read Only Memory". The RAM is an SRAM or a DRAM, for example. The term "SRAM" is an abbreviation for "Static Random Access Memory". The term "DRAM" is an abbreviation for "Dynamic Random Access Memory". The ROM is an EEPROM, for example. The term "EEPROM" is an abbreviation for "Electrically Erasable Programmable Read Only Memory". The flash memory is an SSD, for example. The term "SSD" is an abbreviation for "Solid-State Drive". The magnetic memory is an HDD, for example. The term "HDD" is an abbreviation for "Hard Disk Drive". The storage unit 102 functions as a main storage device, an auxiliary storage device, or a cache memory, for example. The storage unit 102 stores information to be used for the operation of the in-vehicle device 100 and information obtained by the operation of the in-vehicle device 100.

The storage unit 102 corresponds to one of the two or more regions R1, R2, ..., and includes a non-volatile memory for storing a profile that is used when performing mobile communication via the first communication circuit 111 within the corresponding region. That is, the storage unit 102 corresponds to one of the two or more regions R1, R2, ..., and includes a non-volatile memory for storing a profile that is used when performing communication by the first wireless communication method via the communication unit 101 within the corresponding region. In the present embodiment, the non-volatile memory stores the first profile 121 in advance. The first profile 121 is a profile that is used when performing mobile communication via the first communication circuit 111 to receive the second profile 122 that is common to the two or more regions R1, R2, ... and provided by the server device 20. That is, the first profile 121 is a profile that is used when performing communication by the first wireless communication method via the communication unit 101 to acquire the second profile 122 that is common to the two or more regions R1, R2, ... and provided by the server device 20.

The control unit 103 includes at least one processor, at least one programmable circuit, at least one dedicated circuit, or any combination of these. The processor may be a general-purpose processor such as a CPU or a GPU, or a dedicated processor specialized for a particular process. The term "CPU" is an abbreviation for "Central Processing Unit". The term "GPU" is an abbreviation for "Graphics Processing Unit". The programmable circuit is an FPGA, for example. The term "FPGA" is an abbreviation for "Field-Programmable Gate Array". The dedicated circuit is an ASIC, for example. The term "ASIC" is an abbreviation for "Application Specific Integrated Circuit". The control unit 103 executes processes related to the operation of the in-vehicle device 100 while controlling each unit of the in-vehicle device 100.

The positioning unit 104 includes at least one GNSS receiver. The term "GNSS" is an abbreviation for "Global Navigation Satellite System". The GNSS is GPS, QZSS, BDS, GLONASS, or Galileo, for example. The term "GPS" is an abbreviation for "Global Positioning System". The term "QZSS" is an abbreviation for "Quasi-Zenith Satellite System". The satellites of the QZSS are referred to as quasi-zenith satellites. The term "BDS" is an abbreviation for "BeiDou Navigation Satellite System". The term "GLONASS" is an abbreviation for "Global Navigation Satellite System". The positioning unit 104 measures the position of the in-vehicle device 100. That is, the positioning unit 104 measures the position of the vehicle 10 in which the in-vehicle device 100 is installed.

The functions of the in-vehicle device 100 are implemented by a processor serving as the control unit 103 by executing a program according to the present embodiment. That is, the functions of the in-vehicle device 100 are implemented by software. The program causes a computer to function as the in-vehicle device 100 by causing the computer to execute the operation of the in-vehicle device 100. That is, the computer functions as the in-vehicle device 100 by executing the operation of the in-vehicle device 100 according to the program.

The program can be stored in a non-transitory computer-readable medium. The non-transitory computer-readable medium is a flash memory, a magnetic recording device, an optical disk, a magneto-optical recording medium, or a ROM, for example. The distribution of the program is carried out by selling, transferring, or renting a portable medium such as an SD card, a DVD, or a CD-ROM in which the program is stored, for example. The term "SD" is an abbreviation for "Secure Digital". The term "DVD" is an abbreviation for "Digital Versatile Disc". The term "CD-ROM" is an abbreviation for "Compact Disc Read Only Memory". The program may be distributed by storing the program in a storage of a server and transferring the program from the server to other computers. The program may be provided as a program product.

The computer temporarily stores a program stored in a portable medium or transferred from a server in a main storage device, for example. Then, the computer reads the program stored in the main storage device with a processor, and executes processing according to the read program with the processor. The computer may read the program directly from the portable medium, and execute processing according to the program. The computer may execute processing according to the received program each time the program is transferred from the server to the computer. The processing may be executed by a so-called ASP type service, which implements functions only by issuing execution instructions and acquiring results, without transferring a program from a server to a computer. The term "ASP" is an abbreviation for "Application Service Provider". The program includes information that is to be processed by an electronic computer and that is equivalent to a program. For example, data that is not a direct command to a computer but has the property of defining the processing of the computer corresponds to the "information equivalent to a program".

Some or all of the functions of the in-vehicle device 100 may be implemented by a programmable circuit or a dedicated circuit as the control unit 103. That is, some or all of the functions of the in-vehicle device 100 may be implemented by hardware.

The configuration of the server device 20 according to the present embodiment will be described with reference to FIG. 1.

The server device 20 includes a communication unit 21, a storage unit 22, and a control unit 23.

The communication unit 21 includes at least one communication circuit. The communication circuit is a communication circuit that supports a wired LAN communication standard such as Ethernet (registered trademark), or a communication circuit that supports a wireless LAN communication standard such as IEEE 802.11, for example. The communication unit 21 receives information to be used for the operation of the server device 20, and transmits information obtained by the operation of the server device 20.

The storage unit 22 includes at least one semiconductor memory, at least one magnetic memory, at least one optical memory, or any combination of these. The semiconductor memory is a RAM, a ROM, or a flash memory, for example. The RAM is an SRAM or a DRAM, for example. The ROM is an EEPROM, for example. The flash memory is an SSD, for example. The magnetic memory is an HDD, for example. The storage unit 22 functions as a main storage device, an auxiliary storage device, or a cache memory, for example. The storage unit 22 stores information to be used for the operation of the server device 20 and information obtained by the operation of the server device 20.

The control unit 23 includes at least one processor, at least one programmable circuit, at least one dedicated circuit, or any combination of these. The processor may be a general-purpose processor such as a CPU or a GPU, or a dedicated processor specialized for a particular process. The programmable circuit is an FPGA, for example. The dedicated circuit is an ASIC, for example. The control unit 23 executes processes related to the operation of the server device 20 while controlling each unit of the server device 20.

The functions of the server device 20 are implemented by a processor serving as the control unit 23 by executing a server program. That is, the functions of the server device 20 are implemented by software. Alternatively, some or all of the functions of the server device 20 may be implemented by a programmable circuit or a dedicated circuit as the control unit 23. That is, some or all of the functions of the server device 20 may be implemented by hardware.

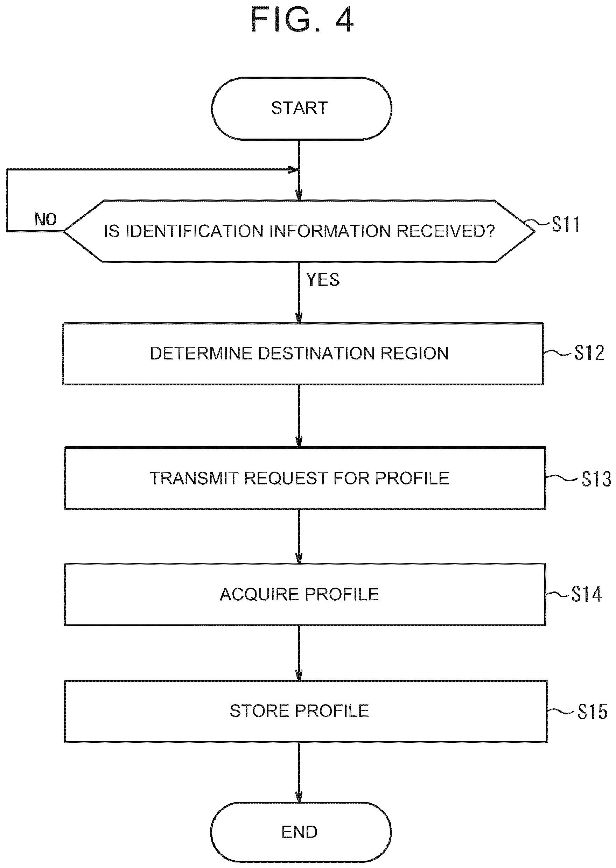

The operation of the in-vehicle device 100 according to the present embodiment will be described with reference to FIG. 4. The operation described below corresponds to a profile setting method performed by the in-vehicle device 100. That is, the profile setting method according to the present embodiment includes steps S11 to S15 illustrated in FIG. 4.

In S11, the control unit 103 stands by until identification information is received by performing communication by the second wireless communication method via the communication unit 101. The control unit 103 receives identification information linked to the first region Rt, among the two or more regions R1, R2, ..., from the wireless communication device 40 installed in the first region Rt by performing communication by the second wireless communication method with the wireless communication device 40 via the communication unit 101. The first region Rt is here a destination region such as the second country in the example illustrated in FIG. 3, but may also be a region for a temporary stay such as the second country in the different example.

Specifically, the control unit 103 receives identification information linked to the destination region from the wireless communication device 40 by performing wireless local area network communication or short-range wireless communication with the wireless communication device 40 installed within the destination region via the second communication circuit 112. The destination region is the destination country, for example. The destination country means the country to which the vehicle 10 is to be transported, excluding the country in which the vehicle 10 was manufactured. As a transportation method, marine transportation in which the vehicle 10 is loaded and transported on the transport ship 50 as illustrated in FIG. 3, for example, is assumed. However, any method may be adopted as long as the vehicle 10 can be transported to the destination country. For example, when the transport ship 50 carrying the vehicle 10 arrives at the port P in the destination country, and the wireless communication device 40 installed in the destination country and the vehicle 10 including the in-vehicle device 100 approach each other within a communicable distance of 100 meters, for example, the control unit 103 detects a beacon signal broadcast by the wireless communication device 40, and recognizes the identification information contained in the beacon signal.

In a first example, the identification information is an identifier of the wireless communication device 40. The identifier of the wireless communication device 40 is an SSID or a MAC address, for example. The SSID may be an ESSID. The term "ESSID" is an abbreviation for "Extended Service Set IDentifier".

In a second example, the identification information may include an identifier of the destination region. The identifier of the destination region is a character string indicating a country name or a country code, for example.

In S12, the control unit 103 determines the destination region based on the identification information received in S11.

In the first example, the control unit 103 determines the destination region based on the identification information and correspondence relationship information stored in the storage unit 102. The correspondence relationship information is information relating to the correspondence relationship between the identifiers of the wireless communication device 40 and one or more other wireless communication devices and the two or more regions R1, R2, .... That is, in the first example, each of the two or more regions R1, R2, ... is linked in advance to the identifier of each wireless communication device including the wireless communication device 40. For example, it is assumed that the storage unit 102 has stored in advance, as the correspondence relationship information, a table that links, for each Wi-Fi access point, an SSID and a country code of the country in which the Wi-Fi access point is installed. When an SSID is received from a Wi-Fi access point installed at a port in Japan in S11, the control unit 103 determines that the destination country is Japan by acquiring a country code "JP" linked to the received SSID from the table.

In the second example, the control unit 103 determines the destination region based on the identification information. For example, when an SSID "12345678-JP" is received from a Wi-Fi access point installed at a port in Japan in S11, the control unit 103 determines that the destination country is Japan by acquiring a country code "JP" included in the received SSID.

The control unit 103 may determine the destination area based on the identification information received in S11 and the position measured by the positioning unit 104. In the first or second example, when it is determined that the destination country is Japan, the control unit 103 determines whether the current location is within Japan by comparing the latitude and longitude of the current location of the vehicle 10, obtained by the GNSS receiver as the positioning unit 104, with the map information stored in the storage unit 102, for example. When it is determined that the current location is within Japan, the country determination function has functioned properly. On the other hand, when it is determined that the current location is not within Japan, it means that the country determination function did not function properly, and therefore step S11 is executed again or the flow illustrated in FIG. 4 is forcibly terminated. In the case of forced termination, it is desirable that the control unit 103 should store in the storage unit 102 an error log indicating that the country determination function did not function properly.

In S13, the control unit 103 transmits, to the server device 20, a request for a profile corresponding to the destination region determined in S12. In the present embodiment, the control unit 103 transmits a request for a profile corresponding to the destination region to the server device 20 by performing communication by the first wireless communication method via the communication unit 101 using the first profile 121 stored in the storage unit 102.

Specifically, the control unit 103 transmits a request for a profile corresponding to the destination region to the server device 20 by performing mobile communication via the first communication circuit 111 using the first profile 121 stored in the storage unit 102. The first profile 121 is an initial profile, that is, a first communication profile that is assigned to the vehicle 10 at the time of factory shipment, for example. The first profile 121 is a communication profile for receiving a local profile in any country using the mobile communication network 30 of a local communication carrier, while restricting other communications. The first profile 121 includes at least information that may be required for authentication, but may also include other information such as the name of the vehicle manufacturer, the country of manufacture, or the date and time of production. For example, when it is determined in S12 that the destination country is Japan, the control unit 103 transmits the information included in the first profile 121 to the mobile communication network 30 of a local communication carrier via the first communication circuit 111. When the authentication on the mobile communication network 30 side based on the transmitted information is successful, the control unit 103 is permitted to access the mobile communication network 30, and thus accesses the Internet by way of the mobile communication network 30 via the first communication circuit 111 and transmits a request signal including the country code "JP" to the server device 20, for example.

In S14, the control unit 103 acquires a profile corresponding to the destination region from the server device 20. In the present embodiment, the control unit 103 acquires a profile corresponding to the destination region from the server device 20 as the second profile 122 by performing communication by the first wireless communication method via the communication unit 101 using the first profile 121 stored in the storage unit 102.

Specifically, the control unit 103 receives a profile corresponding to the destination region from the server device 20 as the second profile 122 by performing mobile communication via the first communication circuit 111 using the first profile 121 stored in the storage unit 102. The second profile 122 is a communication profile for performing wireless communication using the mobile communication network 30 of a local communication carrier in the destination country, for example. For example, when a request signal including a country code "JP" is transmitted in S13, the control unit 23 of the server device 20 determines to transmit, via the communication unit 21, a profile corresponding to the country code "JP", among profiles corresponding to the country codes of various countries and stored in advance in the storage unit 22. The control unit 103 receives a profile corresponding to the country code "JP" from the server device 20 by way of the Internet and the mobile communication network 30 via the first communication circuit 111.

In S15, the control unit 103 stores the profile acquired in S14 in the storage unit 102. In the present embodiment, for example, the control unit 103 stores the second profile 122 received in S14 in the storage unit 102 by overwriting the first profile 121 with the second profile 122. For example, when a profile corresponding to the country code "JP" is received in S14, the control unit 103 rewrites the initial profile stored in advance in the storage unit 102 with the profile corresponding to the country code "JP".

In a modification, in S13 and S14, the control unit 103 may acquire a profile corresponding to the destination region from the server device 20 via the wireless communication device 40 by further performing communication by the second wireless communication method via the communication unit 101.

Specifically, the control unit 103 may receive a profile corresponding to the destination region from the server device 20 by further performing wireless local area network communication or short-range wireless communication via the second communication circuit 112. For example, it is assumed that the wireless communication device 40 is a Wi-Fi access point connected to the Internet. When it is determined in S12 that the destination country is Japan, the control unit 103 accesses the Internet via the second communication circuit 112 by way of a Wi-Fi access point, that is, by way of a wireless LAN, and transmits a request signal including the country code "JP" to the server device 20. Then, the control unit 103 receives a profile corresponding to the country code "JP" from the server device 20 by way of the Internet and the wireless LAN via the second communication circuit 112.

As described above, according to the present embodiment, the destination region is automatically determined based on the identification information on the wireless communication device 40 detected by the in-vehicle device 100, which reduces the possibility of erroneously determining the destination region compared to a method in which the detection of radio waves from a local mobile communication network is used as a trigger. That is, the possibility of erroneously acquiring a profile for a region different from the first region Rt can be reduced.

The present disclosure is not limited to the above embodiment. For example, two or more blocks illustrated in the block diagram may be integrated, or a single block may be divided. Instead of executing two or more steps illustrated in the flowchart in chronological order according to the description, the steps may be executed in parallel or in a different order, depending on the processing capacities of the devices that execute the steps, or as necessary. Other changes may be made without departing from the scope of the present disclosure.

Some embodiments of the present disclosure will be indicated below. However, it should be noted that the embodiments of the present disclosure are not limited to these.
Appendix 1 An in-vehicle device installed in a vehicle, including:
   a first communication circuit that supports a mobile communication standard that utilizes a mobile communication network of a regional communication carrier;
   a second communication circuit that supports a wireless local area network communication standard or a short-range wireless communication standard;
   a storage unit that stores a profile that corresponds to one of two or more regions and that is used when performing mobile communication via the first communication circuit within a corresponding region, and that stores a first profile that is used when performing the mobile communication via the first communication circuit to receive a second profile that is common to the two or more regions and provided by an information processing device; and
   a control unit that performs wireless local area network communication or short-range wireless communication with a wireless communication device installed in a first region, among the two or more regions, via the second communication circuit, receive identification information linked to the first region from the wireless communication device, perform the mobile communication via the first communication circuit using the first profile stored in the storage unit, receive, from the information processing device, a profile corresponding to the first region as the second profile, and store the second profile in the storage unit by overwriting the first profile with the received second profile.
Appendix 2 An in-vehicle device installed in a vehicle, including:
   a communication unit that supports both a first wireless communication method that utilizes a mobile communication network of a regional communication carrier and a second wireless communication method that is different from the first wireless communication method;
   a storage unit that stores a profile that corresponds to one of two or more regions and that is used when performing communication by the first wireless communication method via the communication unit within a corresponding region; and
   a control unit that performs communication by the second wireless communication method with a wireless communication device installed in a first region, among the two or more regions, via the communication unit, receives identification information linked to the first region from the wireless communication device, acquires a profile corresponding to the first region from an information processing device, and stores the acquired profile in the storage unit.
Appendix 3 The in-vehicle device according to appendix 2, in which:
   the storage unit stores a first profile that is used when performing communication by the first wireless communication method via the communication unit to acquire a second profile that is common to the two or more regions and provided by the information processing device; and
   the control unit is configured to, upon receiving the identification information from the wireless communication device, acquire the profile corresponding to the first region from the information processing device as the second profile by performing communication by the first wireless communication method via the communication unit using the first profile stored in the storage unit.
Appendix 4 The in-vehicle device according to appendix 3, in which the control unit overwrites the first profile with the second profile.
Appendix 5 The in-vehicle device according to appendix 2, in which the control unit is configured to: upon receiving the identification information from the wireless communication device, further perform communication by the second wireless communication method via the communication unit; and acquire the profile corresponding to the first region from the information processing device via the wireless communication device.
Appendix 6 The in-vehicle device according to any one of appendices 2 to 5, in which:
   the identification information is an identifier of the wireless communication device; and
   the control unit acquires, from the information processing device, a profile corresponding to a region linked in advance to the identifier of the wireless communication device, among the two or more regions, as the profile corresponding to the first region.
Appendix 7 The in-vehicle device according to appendix 6, in which:
   the storage unit stores correspondence relationship information relating to a correspondence relationship between identifiers of the wireless communication device and one or more other wireless communication devices and the two or more regions; and
   the control unit is configured to
      determine the first region based on the identification information and the correspondence relationship information stored in the storage unit, and
      transmit a request for the profile corresponding to the determined first region to the information processing device.
Appendix 8 The in-vehicle device according to any one of appendices 2 to 5, in which:
   the identification information includes an identifier of the first region; and
   the control unit is configured to
      determine the first region based on the identification information, and
      transmit a request for the profile corresponding to the determined first region to the information processing device.
Appendix 9 The in-vehicle device according to any one of appendices 2 to 8, further including a positioning unit that measures a position of the vehicle, in which
   the control unit is configured to
   determine the first region based on the identification information and the position measured by the positioning unit, and
   transmit a request for the profile corresponding to the determined first region to the information processing device.
Appendix 10 The in-vehicle device according to any one of appendices 2 to 9, in which the communication by the second wireless communication method is wireless local area network communication or short-range wireless communication.
Appendix 11 The in-vehicle device according to any one of appendices 2 to 10, in which the two or more regions are each a country.
Appendix 12 A vehicle including the in-vehicle device according to any one of appendices 1 to 11.
Appendix 13 A system including:
   the in-vehicle device according to any one of appendices 1 to 11; and
   the information processing device.
Appendix 14 A system including:
   the in-vehicle device according to any one of appendices 1 to 11; and
   the wireless communication device.
Appendix 15 A program that causes a computer to function as the in-vehicle device according to any one of appendices 1 to 11.
Appendix 16 A profile setting method performed by an in-vehicle device installed in a vehicle and including a communication unit that supports both a first wireless communication method that utilizes a mobile communication network of a regional communication carrier and a second wireless communication method that is different from the first wireless communication method, a storage unit that stores a profile that corresponds to one of two or more regions and that is used when performing communication by the first wireless communication method via the communication unit within a corresponding region, and a control unit, the profile setting method including:
   upon receiving identification information linked to a first region, among the two or more regions, from a wireless communication device installed in the first region by performing communication by the second wireless communication method with the wireless communication device via the communication unit, the control unit acquiring a profile corresponding to the first region from an information processing device; and
   the control unit storing the acquired profile in the storage unit.
Appendix 17 The profile setting method according to appendix 16, in which:
   the storage unit stores a first profile that is used when performing communication by the first wireless communication method via the communication unit to acquire a second profile that is common to the two or more regions and provided by the information processing device; and
   the acquiring includes, upon receiving the identification information from the wireless communication device, acquiring the profile corresponding to the first region from the information processing device as the second profile by performing communication by the first wireless communication method via the communication unit using the first profile stored in the storage unit.
Appendix 18 The profile setting method according to appendix 16, in which the acquiring includes, upon receiving the identification information from the wireless communication device, further performing communication by the second wireless communication method via the communication unit, and acquiring the profile corresponding to the first region from the information processing device via the wireless communication device.
Appendix 19 The profile setting method according to any one of appendices 16 to 18, in which:
   the identification information is an identifier of the wireless communication device; and
   the acquiring includes acquiring, from the information processing device, a profile corresponding to a region linked in advance to the identifier of the wireless communication device, among the two or more regions, as the profile corresponding to the first region.
Appendix 20 The profile setting method according to any one of appendices 16 to 18, in which:
   the identification information includes an identifier of the first region; and
   the acquiring includes
      determining the first region based on the identification information, and
   transmitting a request for the profile corresponding to the determined first region to the information processing device.

## Claims

1. An in-vehicle device installed in a vehicle, the in-vehicle device comprising:
a communication device (101) that supports both a first wireless communication method that utilizes a mobile communication network of a regional communication carrier and a second wireless communication method that is different from the first wireless communication method;
a memory (102) configured to store a profile that corresponds to one of two or more regions and that is used for performing communication by the first wireless communication method via the communication device (101) within a corresponding region; and
a processor (103) configured to
perform communication by the second wireless communication method with a wireless communication device installed in a first region, among the two or more regions, via the communication device (101),
receive identification information linked to the first region from the wireless communication device via communication by the second wireless communication method,
acquire a profile corresponding to the first region from an information processing device based on the received identification information, and
store the acquired profile in the memory (102).

2. The in-vehicle device according to claim 1, wherein:
the memory (102) is configured to store a first profile that is used for performing communication by the first wireless communication method via the communication device (101) to acquire a second profile that is common to the two or more regions and provided by the information processing device; and
the processor (103) is configured to, in response to receiving the identification information from the wireless communication device, acquire the profile corresponding to the first region from the information processing device as the second profile in communication by the first wireless communication method via the communication device (101) using the first profile stored in the memory (102).

3. The in-vehicle device according to claim 2, wherein the processor (103) is configured to overwrite the first profile stored in the memory (102) with the second profile.

4. The in-vehicle device according to claim 1, wherein the processor (103) is configured to:
in response to receiving the identification information from the wireless communication device, further perform communication by the second wireless communication method via the communication device (101); and
acquire the profile corresponding to the first region from the information processing device via the wireless communication device.

5. The in-vehicle device according to claim 1, wherein:
the identification information is an identifier of the wireless communication device; and
the processor (103) is configured to acquire, from the information processing device, a profile corresponding to a region linked in advance to the identifier of the wireless communication device, among the two or more regions, as the profile corresponding to the first region.

6. The in-vehicle device according to claim 5, wherein:
the memory (102) is configured to store correspondence relationship information relating to a correspondence relationship between identifiers of the wireless communication device and one or more other wireless communication devices and the two or more regions; and
the processor (103) is configured to
determine the first region based on the identification information and the correspondence relationship information stored in the memory (102), and
transmit a request for the profile corresponding to the determined first region to the information processing device.

7. The in-vehicle device according to claim 1, wherein:
the identification information includes an identifier of the first region; and
the processor (103) is configured to
determine the first region based on the identification information, and
transmit a request for the profile corresponding to the determined first region to the information processing device.

8. The in-vehicle device according to claim 1, further comprising a positioning device (104) configured to measure a position of the vehicle, wherein
the processor (103) is configured to
determine the first region based on the identification information and the position measured by the positioning device (104), and
transmit a request for the profile corresponding to the determined first region to the information processing device.

9. The in-vehicle device according to claim 1, wherein the communication by the second wireless communication method is wireless local area network communication or short-range wireless communication.

10. The in-vehicle device according to claim 1, wherein the two or more regions are each a country.

11. A vehicle comprising the in-vehicle device according to any one of claims 1 to 10.

12. A system comprising:
the in-vehicle device according to any one of claims 1 to 10; and
the information processing device.

13. A system comprising:
the in-vehicle device according to any one of claims 1 to 10; and
the wireless communication device.

14. A profile setting method performed by an in-vehicle device installed in a vehicle and including a communication device (101) that supports both a first wireless communication method that utilizes a mobile communication network of a regional communication carrier and a second wireless communication method that is different from the first wireless communication method, a memory (102) that stores a profile that corresponds to one of two or more regions and that is used for performing communication by the first wireless communication method via the communication device (101) within a corresponding region, and a processor (103), the profile setting method comprising:
in response to receiving identification information linked to a first region, among the two or more regions, from a wireless communication device installed in the first region in communication by the second wireless communication method with the wireless communication device via the communication device (101), the processor (103) acquiring a profile corresponding to the first region from an information processing device; and
the processor (103) storing the acquired profile in the memory (102).

15. The profile setting method according to claim 14, wherein:
the memory (102) stores a first profile that is used for performing communication by the first wireless communication method via the communication device (101) to acquire a second profile that is common to the two or more regions and provided by the information processing device; and
the acquiring includes, in response to receiving the identification information from the wireless communication device, acquiring the profile corresponding to the first region from the information processing device as the second profile in communication by the first wireless communication method via the communication device (101) using the first profile stored in the memory (102).
